# EUROPÄISCHE PATENTANMELDUNG

(11) **EP 4 718 630 A1**
(43) Veröffentlichungstag der Anmeldung: **01.04.2026**
(21) Anmeldenummer: 25197573.6
(22) Anmeldetag: 22.08.2025
(51) Int. Cl.: H01R 4/70, H01R 4/64, H01R 11/11

(54) **ERDUNGS- UND/ODER KURZSCHLIESS- VORRICHTUNG FÜR NIEDERSPANNUNGSANWENDUNGEN SOWIE VERFAHREN ZUM ZUMINDEST TEIL- ODER BEREICHSWEISEN ELEKTRISCHEN ISOLIEREN EINER SOLCHEN ERDUNGS- UND/ODER KURZSCHLIESS- VORRICHTUNG**

(30) Priorität: 25.09.2024 DE 102024127800
(71) Anmelder: Arcus Elektrotechnik Alois Schiffmann GmbH, 81673 München (DE)
(72) Erfinder: Amann, Peter, 81673 München (DE); Dorny, Maximilian, 81673 München (DE)
(74) Vertreter: Meissner Bolte Partnerschaft mbB

(57) **Zusammenfassung**

Die Erfindung betrifft eine Erdungs- und/oder Kurzschließvorrichtung für Niederspannungsanwendungen, wobei die Erdungs- und/oder Kurzschließvorrichtung eine Klemme (3) zum Anschließen an einen Erdungsfestpunkt, insbesondere an einen Kugelbolzen, an einen Zylinderbolzen oder an einen Flachleiter, mit zwei Klemmbacken (4) aufweist, welche ausgebildet sind, den Erdungsfestpunkt zumindest teil- oder bereichsweise aufzunehmen und insbesondere einzuklemmen. Erfindungsgemäß ist insbesondere vorgesehen, dass zumindest die Klemme (3) der Erdungs- und/oder Kurzschließvorrichtung zumindest teil- oder bereichsweise mit einer im Zuge eines additiven Fertigungsverfahrens durch 3D-Druck hergestellten elektrischen Isolierungsschicht (1) umgeben ist.

## Beschreibung

Die vorliegende Erfindung betrifft eine Erdungs- und/oder Kurzschließvorrichtung für Niederspannungsanwendungen und im Einzelnen eine Klemme zum Anschließen an einen Erdungsfestpunkt, wie Kugelbolzen, Zylinderbolzen oder Flachleiter. Die Klemme weist Klemmbacken und eine die Klemmbacken zumindest bereichsweise und vorzugsweise vollständig umschließende Isolierungsschicht auf.

Eine derartige Klemme zum Anschließen an einen Erdungsfestpunkt ist allgemein aus dem Stand der Technik und beispielsweise aus der Druckschrift DE 80 23 201 U1 bekannt. Hierbei handelt es sich um eine voll isolierte Erdungs- und Kurzschließvorrichtung für Niederspannungsanwendungen. Die Erdungs- und Kurzschließvorrichtung ist eine Vorrichtung zum Erden und Kurzschließen von frei geschalteten, auf Spannungsfreiheit geprüften Teilen von elektrischen Anlagen. Die voll isolierte Erdungs- und Kurzschließvorrichtung (EuK-Vorrichtung) ist für den Einsatz in der Niederspannung zugelassen.

Zur Ausbildung der Isolierungsschicht kommt üblicherweise ein im Zuge eines Tauchverfahrens auf die Klemmbacken aufgebrachtes thermisch härtendes System zum Einsatz. Dabei wird die für die elektrische Isolierung notwendige Schichtdicke durch mehrere Tauchbeschichtungsvorgänge erzielt.

Der Nachteil von solchen im Zuge eines Tauchverfahrens gebildeten Isolierungsschichten ist darin zu sehen, dass nach dem Tauchverfahren aufwendige Nachbearbeitungsschritte notwendig sind, um in der Isolierungsschicht ggf. vorzusehende Fensterbereiche insbesondere durch Fräsung wieder freizulegen. Darüber hinaus erlaubt das Tauchverfahren nur das Ausbilden einer Isolierungsschicht mit einheitlichen Isoliereigenschaften.

Gerade bei Erdungs- und/oder Kurzschließvorrichtungen ist es jedoch notwendig, dass bestimmte Komponenten der Erdungs- und/oder Kurzschließvorrichtung, insbesondere der Außenbereich der Klemmbacken, eine bessere elektrische Isolierung aufweist, im Vergleich beispielsweise zu Teilen eines Handgriffs der Erdungs- und/oder Kurzschließvorrichtung. Auch ist es üblicherweise nicht gewünscht, dass im inneren Klemmbereich der Klemmbacken eine Isolierungsschicht vorgesehen ist.

Da mit dem Tauchverfahren nur einheitliche Schichtdicken erzielbar sind, werden üblicherweise alle Komponenten einer Erdungs- und/oder Kurzschließvorrichtung mit einer elektrischen Isolierungsschicht umgeben, die eine einheitliche Schichtdicke aufweist. Dies führt zu einem erhöhten Materialverbrauch für das Isolierungsschichtmaterial.

Von daher liegt der Erfindung die Aufgabe zu Grunde, eine Erdungs- und/oder Kurzschließvorrichtung für Niederspannungsanwendungen anzugeben, die mit weniger Aufwand gefertigt werden kann, wobei gleichzeitig Material eingespart wird.

Die der Erfindung zu Grunde liegende Aufgabe wird insbesondere durch eine Erdungs- und/oder Kurzschließvorrichtung gemäß des unabhängigen Patentanspruchs 1 gelöst, wobei vorteilhafte Weiterbildungen der Erdungs- und/oder Kurzschließvorrichtung in den abhängigen Ansprüchen 2 bis 6 angegeben sind.

Die der Erfindung zu Grunde liegende Aufgabe wird ferner durch ein Verfahren gemäß dem nebengeordneten Patentanspruch 7 gelöst, wobei vorteilhafte Weiterbildungen des erfindungsgemäßen Verfahrens in den abhängigen Ansprüchen 8 bis 10 angegeben sind.

Demgemäß betrifft die Erfindung insbesondere eine Erdungs- und/oder Kurzschließvorrichtung für Niederspannungsanwendungen, wobei die Erdungs- und/oder Kurzschließvorrichtung eine Klemme zum Anschließen an einen Erdungsfestpunkt aufweist. Bei dem Erdungsfestpunkt handelt es sich beispielsweise um einen Kugelbolzen, um einen Zylinderbolzen oder um einen Flachleiter.

Die Klemme der erfindungsgemäßen Erdungs- und/oder Kurzschließvorrichtung umfasst zwei Klemmbacken, welche ausgebildet sind, den Erdungsfestpunkt zumindest teil- oder bereichsweise einzunehmen und insbesondere einzuklemmen.

Die Erdungs- und/oder Kurzschließvorrichtung und insbesondere die Klemme der Erdungs- und/oder Kurzschließvorrichtung ist zumindest teil- oder bereichsweise mit einer elektrischen Isolierungsschicht umgeben. Erfindungsgemäß ist in diesem Zusammenhang insbesondere vorgesehen, dass zumindest die Klemme der Erdungs- und/oder Kurzschließvorrichtung zumindest teil- oder bereichsweise mit einer im Zuge eines additiven Fertigungsverfahrens durch 3D-Druck hergestellten elektrischen Isolierungsschicht umgeben ist.

Mit Hilfe des 3D-Drucks wird das Material der elektrischen Isolierungsschicht Schicht für Schicht aufgetragen, um die drei-dimensionale Isolierungsschicht zu erzeugen. Bei dem 3D-Druck erfolgt insbesondere computergesteuert der schichtweise Aufbau der Isolierungsschicht vorzugsweise auf Basis von CAD/CAM-Daten. Als Werkstoff für den 3D-Druck kommen Kunststoffe, Kunstharze oder Keramiken zum Einsatz.

Im Gegensatz zu einer im Zuge eines Tauchverfahrens gebildeten Isolierungsschicht erhöht sich bei dem vorgeschlagenen 3D-Druck die Wirtschaftlichkeit, insbesondere wenn die zu beschichtenden/zu isolierenden Komponenten der Erdungs- und/oder Kurzschließvorrichtung bzw. der Klemme der Erdungs- und/oder Kurzschließvorrichtung eine komplexe Bauteilgeometrie aufweisen.

Dadurch, dass mit Hilfe des 3D-Drucks die Schichtdicke der elektrischen Isolierungsschicht bereichsweise, insbesondere lokal, einstellbar ist, ermöglicht die Erfindung eine besonders nachhaltige Herstellung von Erdungs- und/oder Kurzschließvorrichtungen.

Gegenüber beispielsweise dem Spritzgussverfahren hat das 3D-Drucken auch den Vorteil, dass das aufwendige Herstellen von Formen und das Formenwechseln entfällt.

Insbesondere entfällt bei dem vorgeschlagenen additiven Fertigungsverfahren durch 3D-Druck eine aufwendige Nachbehandlung der Erdungs- und/oder Kurzschließvorrichtung bzw. der zumindest teil- oder bereichsweise mit der elektrischen Isolierungsschicht beschichteten Komponenten der Erdungs- und/oder Kurzschließvorrichtung.

Gemäß Realisierungen der erfindungsgemäßen Erdungs- und/oder Kurzschließvorrichtung ist somit vorgesehen, dass eine Schichtdicke der elektrischen Isolierungsschicht bereichsweise, insbesondere lokal, variiert. Mit anderen Worten, mit dem additiven Fertigungsverfahren durch 3D-Druck ist die elektrische Isolierungsschicht anwendungsspezifisch ausbildbar.

Insbesondere ist es denkbar, dass in der elektrischen Isolierungsschicht mindestens ein Fensterbereich vorgesehen ist, über welchen ein Spannmittel von außen, das heißt von einem Bereich, der dem von den Klemmbacken der Klemme zumindest teil- oder bereichsweise umschlossenen Bereich gegenüberliegt, in eine der beiden Klemmbacken einbringbar ist. Alternativ oder zusätzlich hierzu kann der mindestens eine Fensterbereich in der elektrischen Isolierungsschicht auch dazu dienen, ein in eine der beiden Klemmbacken eingebrachtes Spannmittel von außen zu manipulieren.

Bei Ausführungsvarianten der erfindungsgemäßen Erdungs- und/oder Kurzschließvorrichtung ist vorgesehen, dass die Erdungs- und/oder Kurzschließvorrichtung einen mit der Klemme verbundenen und insbesondere monolithisch zu der Klemme ausgeführten Handgriffbereich aufweist, welcher ebenso zumindest teil- oder bereichsweise mit der im Zuge eines additiven Fertigungsverfahrens durch 3D-Druck hergestellten elektrischen Isolierungsschicht umgeben ist.

Für die Klemme der Erdungs- und/oder Kurzschließvorrichtung kommen unterschiedliche Varianten in Frage.

Zum einen ist es denkbar, dass eine Klemmbacke der beiden Klemmbacken relativ zu der anderen Klemmbacke bewegbar oder beweglich ausgeführt ist.

Alternativ hierzu ist es aber auch denkbar, dass die beiden Klemmbacken nicht relativ zueinander bewegbar ausgeführt sind. In diesem Zusammenhang bietet es sich an, dass ein in eine der beiden Klemmbacken eingebrachtes Spannmittel dazu dient, den von den Klemmbacken zumindest teil- oder bereichsweise aufgenommenen Erdungsfestpunkt zu kontaktieren.

Insbesondere zeichnet sich die erfindungsgemäße Erdungs- und/oder Kurzschließvorrichtung dadurch aus, dass zumindest die Klemme der Erdungs- und/oder Kurzschließvorrichtung keine durch ein Tauchverfahren gebildete elektrische Isolierungsschicht aufweist.

Bei dem erfindungsgemäßen Verfahren handelt es sich um ein Verfahren zum zumindest teil- oder bereichsweisen elektrischen Isolieren einer Erdungs- und/oder Kurzschließvorrichtung für Niederspannungsanwendungen oder Komponenten der Erdungs- und/oder Kurzschließvorrichtung.

Bei dem erfindungsgemäßen Verfahren wird mit Hilfe eines additiven Fertigungsverfahrens durch 3D-Druck eine drei-dimensionale, elektrisch isolierende Hülle gefertigt, welche zumindest teil- oder bereichsweise derart komplementär zu zumindest einer Komponente der Erdungs- und/oder Kurzschließvorrichtung ausgeführt ist, dass in der drei-dimensionalen Hülle zumindest teil- oder bereichsweise die entsprechende Komponente der Erdungs- und/oder Kurzschließvorrichtung zumindest teil- oder bereichsweise formschlüssig aufnehmbar ist.

Gemäß Weiterbildungen des erfindungsgemäßen Verfahrens ist vorgesehen, dass insbesondere nach dem Fertigen der drei-dimensionalen Hülle zumindest die Komponente der Erdungs- und/oder Kurzschließvorrichtung in die drei-dimensionale Hülle eingesetzt wird. Nach dem Einsetzen zumindest der Komponente der Erdungs- und/oder Kurzschließvorrichtung in die zuvor gefertigte drei-dimensionale Hülle wird mit Hilfe eines additiven Fertigungsverfahrens durch 3D-Druck die zuvor gefertigte drei-dimensionale Hülle und die in der drei-dimensionalen Hülle zumindest teil- oder bereichsweise eingesetzte Komponente der Erdungs- und/oder Kurzschließvorrichtung zumindest teil- oder bereichsweise abdeckende elektrische Isolierungsschicht gebildet.

Bei der Fertigung der drei-dimensionalen Hülle durch 3D-Druck ist vorgesehen, dass die durch 3D-Druck gebildete elektrische Isolierungsschicht einen Abschnitt oder Bereich aufweist, welcher dazu ausgebildet ist, einen mit einer Klemme der Erdungs- und/oder Kurzschließvorrichtung verbundenen Handgriffbereich zumindest teil- oder bereichsweise aufzunehmen.

Bei dem erfindungsgemäßen Verfahren ist insbesondere vorgesehen, dass die mit Hilfe des additiven Fertigungsverfahrens gebildete elektrisch isolierende Hülle und/oder die mit Hilfe des additiven Fertigungsverfahrens gebildete abdeckende elektrische Isolierungsschicht eine insbesondere anwendungsspezifisch angepasste, insbesondere bereichsweise oder lokal variierende Schichtdicke aufweisen/aufweist.

Nachfolgend wird die Erfindung unter Bezugnahme auf die beiliegenden Zeichnungen näher beschrieben.

Es zeigen:

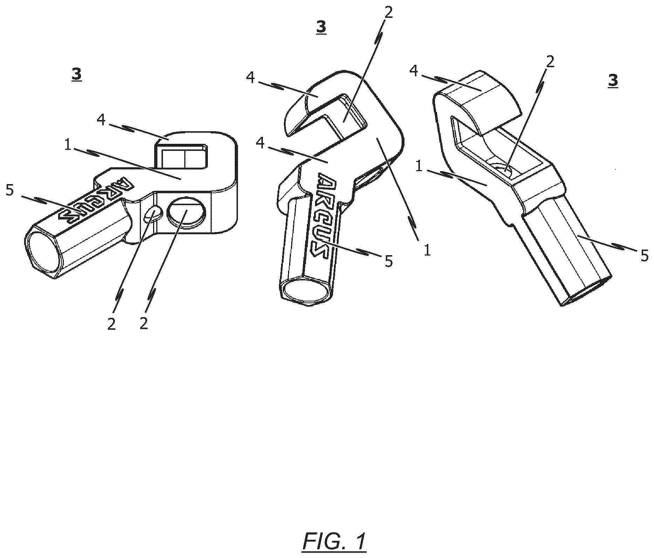

- FIG. 1: jeweils schematisch und in einer isometrischen Ansicht die im Zuge eines additiven Fertigungsverfahrens durch 3D-Druck hergestellte elektrische Isolierung einer ersten exemplarischen Ausführungsform der erfindungsgemäßen Erdungs- und/oder Kurzschließvorrichtung;
- FIG. 2A: schematisch und in einer Draufsicht die elektrische Isolierung der exemplarischen Ausführungsform der Erdungs- und/oder Kurzschließvorrichtung gemäß FIG. 1;
- FIG. 2B: schematisch und in einer Schnittansicht die elektrische Isolierung gemäß FIG. 2A;

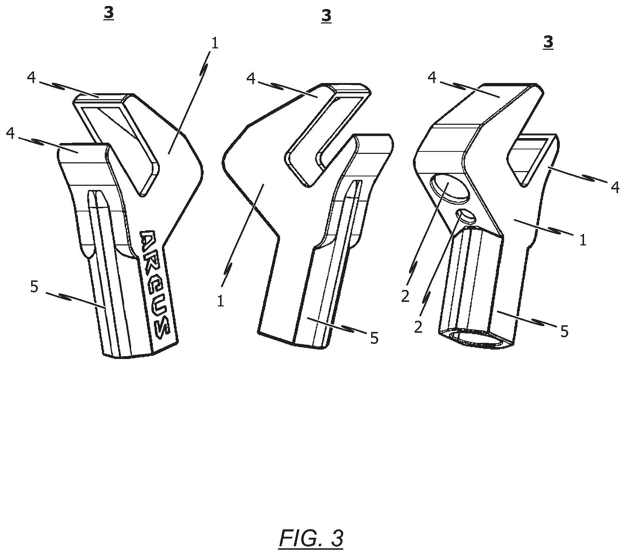

- FIG. 3: jeweils schematisch und in einer isometrischen Ansicht eine im Zuge eines additiven Fertigungsverfahrens durch 3D-Druck hergestellte elektrische Isolierung einer zweiten exemplarischen Ausführungsform der erfindungsgemäßen Erdungs- und/oder Kurzschließvorrichtung;
- FIG. 4A: schematisch und in einer Draufsicht die elektrische Isolierung der exemplarischen Ausführungsform der Erdungs- und/oder Kurzschließvorrichtung gemäß FIG. 3; und
- FIG. 4B: schematisch und in einer Schnittansicht die elektrische Isolierung gemäß FIG. 4A.

In den Zeichnungen sind unterschiedliche Ausführungsformen einer elektrischen Isolierung 1 (Schale) für Erdungs- und/oder Kurzschließvorrichten für Niederspannungsanwendungen gezeigt. Die Erdungs- und/oder Kurzschließvorrichtungen umfassen eine Klemme 3 zum Anschließen an einen Erdungsfestpunkt, wobei die Klemme 3 zwei Klemmbacken 4 aufweist, welche ausgebildet sind, den Erdungsfestpunkt zumindest teil- oder bereichsweise aufzunehmen und insbesondere einzuklemmen.

Bei den in den Zeichnungen gezeigten Ausführungsformen sind die Klemmbacken 4 der Klemmen 3 nicht relativ zueinander bewegbar ausgeführt. Dafür ist in einer der beiden Klemmbacken 4 ein Spannmittel in Gestalt einer Schraube vorgesehen, die dazu dient, den zumindest teil- oder bereichsweise zwischen den beiden Klemmbacken 4 aufgenommenen Erdungsfestpunkt zu fixieren.

Die in den Zeichnungen gezeigten durch 3D-Druck hergestellten Isolierungen 1 (Schalen) eignen sich insbesondere für Erdungs- und/oder Kurzschließvorrichtungen, bei denen die Klemme 3 mit einem Griffteil versehen ist.

Somit umfasst jede durch 3D-Druck hergestellte elektrische Isolierung 1 einen Handgriffbereich 5, welcher zum elektrischen Isolieren des Griffteils der Erdungs- und/oder Kurzschließvorrichtung dient. Vorzugsweise integral mit dem Handgriffbereich 5 ist der Bereich ausgebildet, der zum zumindest teil- oder bereichsweisen elektrischen Isolieren der Klemmbacken 4 dient.

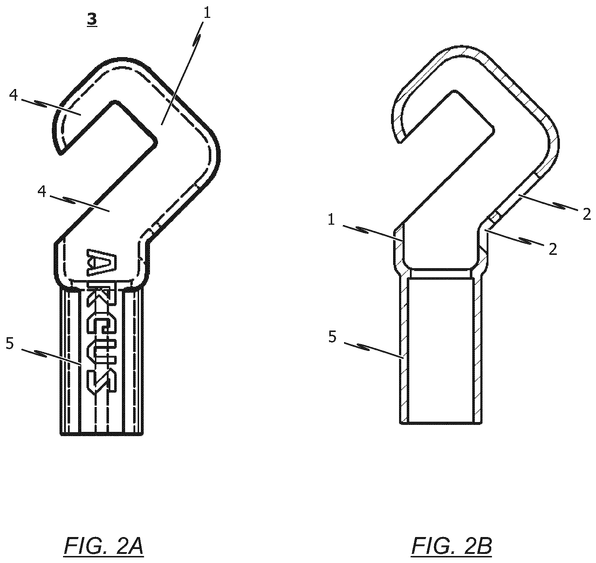

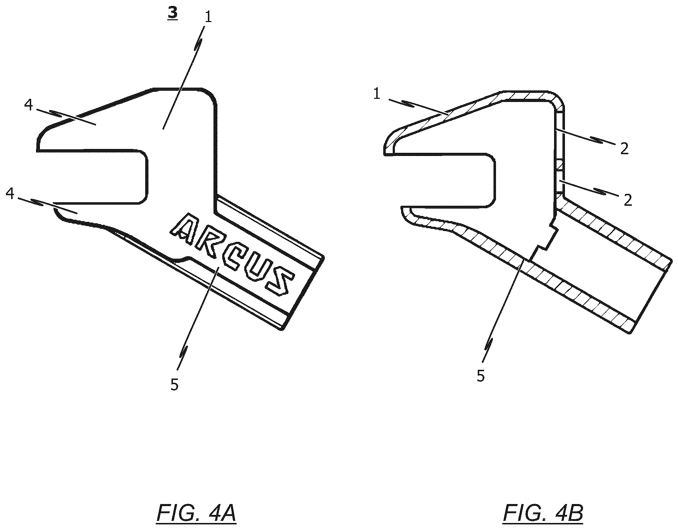

Wie es insbesondere beispielsweise den Schnittansichten in FIG. 2B und FIG. 4B entnommen werden kann, kann durch den 3D-Druck bewusst mindestens ein Fensterbereich 2 in der elektrischen Isolierungsschicht 1 vorgesehen werden, durch den das entsprechende Spannmittel geführt wird oder über den das entsprechende Spannmittel manipulierbar ist.

Die Erfindung ist nicht auf die in den Zeichnungen gezeigten Ausführungsformen beschränkt, sondern ergibt sich aus einer Zusammenschau sämtlicher hierin offenbarter Merkmale.

### Bezugszeichenliste

- 1: Isolierungsschicht/Isolierungsschale
- 2: Fensterbereich
- 3: Klemme
- 4: Klemmbacke
- 5: Handgriffbereich

## Patentansprüche

1. Erdungs- und/oder Kurzschließvorrichtung für
Niederspannungsanwendungen, wobei die Erdungs- und/oder Kurzschließvorrichtung eine Klemme (3) zum Anschließen an einen Erdungsfestpunkt, insbesondere an einen Kugelbolzen, an einen Zylinderbolzen oder an einen Flachleiter, mit zwei Klemmbacken (4) aufweist, welche ausgebildet sind, den Erdungsfestpunkt zumindest teil- oder bereichsweise aufzunehmen und insbesondere einzuklemmen,
**dadurch gekennzeichnet, dass**
zumindest die Klemme (3) der Erdungs- und/oder Kurzschließvorrichtung zumindest teil- oder bereichsweise mit einer im Zuge eines additiven Fertigungsverfahrens durch 3D-Druck hergestellten elektrischen Isolierungsschicht (1) umgeben ist.

2. Erdungs- und/oder Kurzschließvorrichtung nach Anspruch 1,
wobei eine Schichtdicke der elektrischen Isolierungsschicht (1) bereichsweise, insbesondere lokal, variiert.

3. Erdungs- und/oder Kurzschließvorrichtung nach Anspruch 1 oder 2,
wobei in der elektrischen Isolierungsschicht (1) mindestens ein Fensterbereich (2) vorgesehen ist, über welchen ein Spannmittel von außen, d.h. von einem dem von den Klemmbacken (4) zumindest teil- oder bereichsweise umschlossenen Bereich gegenüberliegenden Bereich, in eine der beiden Klemmbacken (4) einbringbar und/oder über welchen ein in eine der beiden Klemmbacken (4) eingebrachtes Spannmittel von außen manipulierbar ist.

4. Erdungs- und/oder Kurzschließvorrichtung nach einem der Ansprüche 1 bis 3, wobei die Erdungs- und/oder Kurzschließvorrichtung einen mit der Klemme (3) verbundenen und insbesondere monolithisch zu der Klemme (3) ausgeführten Handgriffbereich (5) aufweist, welcher ebenso zumindest teil- oder bereichsweise mit der im Zuge eines additiven Fertigungsverfahrens durch 3D-Druck hergestellten elektrischen Isolierungsschicht (1) umgeben ist.

5. Erdungs- und/oder Kurzschließvorrichtung nach einem der Ansprüche 1 bis 4, wobei eine Klemmbacke (4) der beiden Klemmbacken (4) relativ zu der anderen Klemmbacke (4) bewegbar oder beweglich ausgeführt ist.

6. Erdungs- und/oder Kurzschließvorrichtung nach einem der Ansprüche 1 bis 5, wobei zumindest die Klemme (3) der Erdungs- und/oder Kurzschließvorrichtung keine durch ein Tauchverfahren gebildete elektrische Isolierungsschicht (1) aufweist.

7. Verfahren zum zumindest teil- oder bereichsweisen elektrischen Isolieren einer Erdungs- und/oder Kurzschließvorrichtung für Niederspannungsanwendungen oder Komponenten der Erdungs- und/oder Kurzschließvorrichtung, wobei das Verfahren zumindest den folgenden Verfahrensschritt aufweist:
(a) mit Hilfe eines additiven Fertigungsverfahrens wird durch 3D-Druck eine drei-dimensionale, elektrisch isolierende Hülle gefertigt, welche zumindest teil- oder bereichsweise derart komplementär zu zumindest einer Komponente der Erdungs- und/oder Kurzschließvorrichtung ausgeführt ist, dass in der drei-dimensionalen Hülle zumindest teil- oder bereichsweise die entsprechende Komponente der Erdungs- und/oder Kurzschließvorrichtung zumindest teil- oder bereichsweise formschlüssig aufnehmbar ist.

8. Verfahren nach Anspruch 7,
wobei das Verfahren ferner zumindest die folgenden Verfahrensschritte aufweist:
(b) insbesondere nach dem Fertigen der drei-dimensionalen Hülle im Verfahrensschritt (a) wird zumindest die Komponente der Erdungs- und/oder Kurzschließvorrichtung in die drei-dimensionale Hülle eingesetzt; und
(c) insbesondere nach dem Einsetzen zumindest der Komponente der Erdungs- und/oder Kurzschließvorrichtung in die in dem Verfahrensschritt (a) gefertigte drei-dimensionale Hülle wird mit Hilfe eines additiven Fertigungsverfahrens durch 3D-Druck eine die in dem Verfahrensschritt (a) gefertigte drei-dimensionale Hülle und die in der drei-dimensionalen Hülle zumindest teil- oder bereichsweise eingesetzte Komponente der Erdungs- und/oder Kurzschließvorrichtung zumindest teil- oder bereichsweise abdeckende elektrische Isolierungsschicht (1) gebildet.

9. Verfahren nach Anspruch 7 oder 8,
wobei die im Verfahrensschritt (a) mit Hilfe des additiven Fertigungsverfahrens durch 3D-Druck gefertigte drei-dimensionale Hülle und/oder die im Verfahrensschritt (c) durch 3D-Druck gebildete abdeckende elektrische Isolierungsschicht (1) einen Abschnitt oder Bereich aufweisen/aufweist, welcher dazu ausgebildet ist, einen mit einer Klemme (3) der Erdungs- und/oder Kurzschließvorrichtung verbundenen Handgriffbereich (5) zumindest teil- oder bereichsweise aufzunehmen.

10. Verfahren nach einem der Ansprüche 7 bis 9,
wobei die mit Hilfe des additiven Fertigungsverfahrens gebildete elektrisch isolierende Hülle und/oder die mit Hilfe des additiven Fertigungsverfahrens gebildete abdeckende elektrische Isolierungsschicht (1) eine insbesondere anwendungsspezifisch angepasste, insbesondere bereichsweise oder lokal variierende Schichtdicke aufweisen/aufweist.
